# EUROPÄISCHE PATENTSCHRIFT

(11) **EP 4 093 592 B1**
(45) Veröffentlichungstag und Bekanntmachung des Hinweises auf die Patenterteilung: **18.06.2025**
(21) Anmeldenummer: 21700530.5
(22) Anmeldetag: 11.01.2021
(51) Int. Cl.: B29C 48/92, B29C 48/09, B29C 48/88, B29C 48/12, B29C 48/11, G01K 3/14, G01K 13/06, B29L 31/00

(54) **VORRICHTUNG UND VERFAHREN ZUM BESTIMMEN DER TEMPERATUR INNERHALB EINES ROHRFÖRMIGEN STRANGS**
DEVICE AND METHOD FOR DETERMINING THE TEMPERATURE WITHIN A TUBULAR STRAND
DISPOSITIF ET PROCEDE DE DETERMINATION DE LA TEMPERATURE A L'INTERIEUR D'UN TORON TUBULAIRE

(30) Priorität: 24.01.2020 DE 102020101724
(43) Veröffentlichungstag der Anmeldung: 30.11.2022
(73) Patentinhaber: SIKORA AG, 28307 Bremen (DE)
(72) Erfinder: SIKORA, Harald, 28357 Bremen (DE); FRANK, Christian, 28211 Bremen (DE)
(74) Vertreter: Hauck Patent- und Rechtsanwälte PartmbB
(86) Internationale Anmeldenummer: PCT/EP2021/050382
(87) Internationale Veröffentlichungsnummer: WO 2021/148269

(56) Entgegenhaltungen:
- EP-A1- 3 480 553
- EP-A2- 2 153 970
- DE-A1- 102006 056 735
- DE-A1- 3 140 253
- DE-B3- 102017 116 955
- DE-U1- 202018 006 144

## Beschreibung

Die Erfindung betrifft eine Vorrichtung und ein Verfahren zum Bestimmen der Temperatur eines aus einer Extrusionsvorrichtung geförderten rohrförmigen Strangs.

In Extrusionsvorrichtungen werden zum Beispiel Kunststoffrohre extrudiert. Diese durchlaufen nach Austritt aus der Extrusionsvorrichtung in der Regel eine Kalibriereinrichtung mit einer zum Beispiel metallischen Kalibrierhülse, gegen deren Innenfläche das Kunststoffrohr gepresst wird, beispielsweise angesaugt wird, um so die Außengeometrie vorzugeben. In der Regel nachfolgend zu der Kalibriereinrichtung durchlaufen die Kunststoffrohre weiterhin eine oder mehrere Kühlstrecken, in denen zur Abkühlung des Rohrs Kühlflüssigkeit, wie Kühlwasser, auf die Außenseite des Rohrs gesprüht wird.

Grundsätzliche Zielsetzung eines Extrusionsprozesses zur Herstellung eines rohrförmigen Strangs ist das Erreichen eines minimalen Saggings, also einer minimalen Wanddickenabweichung des fertig hergestellten Strangs über seinen Umfang, eines minimalen Energieeintrags sowie einer maximalen Fördergeschwindigkeit des extrudierten Strangs. Für die Optimierung dieser Parameter ist eine genaue Kenntnis des Produktionsprozesses entscheidend. Beispielsweise aus WO 2016/139155 A1 ist eine Vermessung verschiedener Geometrieparameter, zum Beispiel der Wanddicke, eines rohrförmigen Strangs bekannt. Dabei wird Terahertzstrahlung im Bereich von 10 GHz bis 3 THz auf den zu vermessenden Strang ausgesendet und an den Grenzflächen des Strangs reflektierte Terahertzstrahlung wieder empfangen. Beispielsweise anhand von Laufzeitmessungen können Abstände zu den Grenzflächen und daraus Geometrieparameter, wie Durchmesser und Wanddicken zuverlässig bestimmt werden. Neben den auf diese Weise zu vermessenden Geometrieparametern ist auch die Temperatur des rohrförmigen Strangs ein wichtiger Prozessparameter. Zur berührungslosen Messung der Oberflächentemperatur sind pyroelektrische Sensoren (PIR Sensoren) bekannt. Beispielsweise in WO 2019/166420 A1 bzw. DE 20 2018 006 144 U1 wird vorgeschlagen, mittels einer im unmittelbaren Anschluss an die Extrusionsvorrichtung in das Innere des rohrförmigen Strangs geführten Messeinrichtung die Temperatur am Innenumfang des rohrförmigen Strangs zu messen. Das Einbringen eines Sensors in das Innere des rohrförmigen Strangs ist allerdings nicht unaufwendig. Darüber hinaus ist dies im Wesentlichen nur im unmittelbaren Anschluss an die Extrusionsvorrichtung möglich.

Aus DE 10 2017 116 955 B3 sind ein Verfahren und eine Vorrichtung zur Fertigungskontrolle eines extrudierten Kunststoffprodukts bekannt, bei dem eine erste Ist-Temperatur eines an dem Kunststoffprodukt vorgesehenen Messbereichs an einer ersten Messstelle und eine zweite Ist-Temperatur des Messbereichs an einer zweiten Messstelle, die in einer Extrusionsrichtung des Kunststoffprodukts beabstandet von der ersten Messstelle angeordnet ist, erfasst werden. Weiterhin wird eine Soll-Temperatur des Messbereichs an der zweiten Messstelle bestimmt, wobei die Soll-Temperatur basierend auf der ersten Ist-Temperatur mithilfe einer Auskühlkurve des Kunststoffprodukts errechnet wird, oder wobei die Soll-Temperatur anhand eines Produktionsversuchs bestimmt wird. Eine Information wird ausgegeben, ob die zweite Ist-Temperatur innerhalb oder außerhalb eines vorgegebenen Toleranzbereichs der Soll-Temperatur liegt. Aus Abweichungen der zweiten Ist-Temperatur von der Soll-Temperatur soll auf eine Wandstärkenänderung an dem Kunststoffprodukt geschlossen werden. Auf diese Weise soll eine kontinuierliche Wandstärkenüberwachung, insbesondere eine Inline-Wandstärkenkontrolle, möglich sein.

In DE 31 40 253 A1 wird ein Verfahren zur Messung der Dicke von warmgeformten Produkten vorgeschlagen, bei dem die Abkühlgeschwindigkeit des Produkts gemessen wird und daraus auf die Dicke geschlossen wird.

Aus DE 10 2006 056 735 A1 ist ein Messverfahren zur Bestimmung der Wanddicke eines extrudierten Kunststoffprofils bekannt unter Verwendung eines unter Zwischenschaltung eines Koppelmediums senkrecht auf die Oberfläche des Kunststoffprofils abstrahlenden Ultraschallsensors zur Erfassung eines Laufzeitunterschiedes zwischen Vor- und Rückwandecho. Dabei soll die Wanddickenmessung auf ultraschalltechnischem Wege hinsichtlich der Körpertemperatur des extrudierten Kunststoffprofils kalibriert werden, indem die Laufzeitmessung mindestens zweifach bei unterschiedlichen Einschallwinkeln erfolgt und anhand eines Vergleichs bei der Laufzeitwerte die Wanddickenmessung kalibriert wird.

Aus EP 3 480 553 A1 sind ein Terahertzmessverfahren und eine Terahertzmessvorrichtung zum Messen mindestens einer Wanddicke eines rohrförmigen Messobjekts bekannt, bei dem ein Terahertzhauptsensor einen Terahertzhauptstrahl entlang einer ersten optischen Achse durch eine Symmetrieachse des Messobjekts aussendet und ein Terahertzzusatzsensor einen Terahertzzusatzstrahl entlang einer zweiten optischen Achse, die gegenüber der ersten optischen Achse um einen Sensorwinkel verstellt ist und zumindest zeitweise nicht durch die Symmetrieachse verläuft, ausstrahlt. Eine Auswerte- und Steuereinrichtung nimmt eine erste Signalamplitude des Terahertzhauptsensors und eine zweite Signalamplitude des Terahertzzusatzsensors auf, wobei Reflexionspeaks in den Signalamplituden ermittelt werden und eine innere Wanddickenverformung detektiert wird.

EP 2 153 970 A2 beschreibt eine Exrusionslinie für Hohlprofile aus Kunststoff, bei der die gesamte Kühlstrecke zum Abkühlen des extrudierten Profils in einzelne kurze Kühlabschnitte (Segmente) unterteilt ist, die separat ansteuerbar ausgelegt sind. Dadurch soll eine für die spezielle Anwendung optimale Reihenfolge von Kühl- oder Temperstrecken festgelegt und damit eine annähernd lineare Abkühlung des Hohlprofils erreicht werden, woraus bessere Produkteigenschaften resultieren sollen. Zudem soll die Kühlung effektiver sein, da in den zwischengeschalteten Temperabschnitten ein Temperaturausgleich in der Profilwandung erfolgen kann.

Ausgehend von dem erläuterten Stand der Technik liegt der Erfindung die Aufgabe zugrunde, eine Vorrichtung und ein Verfahren bereitzustellen, mit denen genauere Informationen insbesondere über die Temperatur des rohrförmigen Strangs zur Optimierung des Produktionsprozesses erlangt werden können. Insbesondere liegt der Erfindung auch die Aufgabe zugrunde, die Messgenauigkeit zu verbessern bei der Berechnung des Durchmessers und/oder der Wanddicke des rohrförmigen Strangs am Messort, sowie dessen Länge, dessen Wanddicken und dessen Durchmesser nach der Abkühlung des rohrförmigen Stranges.

Die Erfindung löst die Aufgabe durch die unabhängigen Ansprüche 1 und 17. Vorteilhafte Ausgestaltungen finden sich in den abhängigen Ansprüchen, der Beschreibung und den Figuren.

Für eine Vorrichtung der eingangs genannten Art löst die Erfindung die Aufgabe dadurch, dass ein erster Temperatursensor vorgesehen ist zum Messen einer ersten Temperatur der Außenseite des rohrförmigen Strangs an einer ersten Position des rohrförmigen Strangs, und dass eine Auswerteeinrichtung vorgesehen ist, die dazu ausgebildet ist, die erste Temperatur mit einer zweiten Temperatur der Außenseite des rohrförmigen Strangs an einer in Förderrichtung des rohrförmigen Strangs zu der ersten Position beabstandeten zweiten Position des rohrförmigen Strangs zu vergleichen, und aus dem Vergleich der ersten und zweiten Temperatur die Temperatur innerhalb des rohrförmigen Strangs und/oder auf der Innenseite des rohrförmigen Strangs an einer Position des rohrförmigen Strangs zu bestimmen.

Für ein Verfahren der eingangs genannten Art löst die Erfindung die Aufgabe dadurch, dass eine erste Temperatur der Außenseite des rohrförmigen Strangs an einer ersten Position des rohrförmigen Strangs gemessen wird, dass die erste Temperatur mit einer zweiten Temperatur der Außenseite des rohrförmigen Strangs an einer in Förderrichtung des rohrförmigen Strangs zu der ersten Position beabstandeten zweiten Position des rohrförmigen Strangs verglichen wird, und dass aus dem Vergleich der ersten und zweiten Temperatur die Temperatur innerhalb des rohrförmigen Strangs und/oder auf der Innenseite des rohrförmigen Strangs an einer Position des rohrförmigen Strangs bestimmt wird.

Die erfindungsgemäße Vorrichtung kann die Extrusionsvorrichtung und/oder eine Fördereinrichtung zum Fördern des rohrförmigen Strangs umfassen. Die erfindungsgemäße Vorrichtung kann auch den rohrförmigen Strang umfassen. Der rohrförmige Strang kann zum Beispiel ein Kunststoffrohr sein. Es kann sich aber zum Beispiel auch um ein Glasfaserrohr oder einen anderen Strang handeln. Die erfindungsgemäße Vorrichtung kann eine oder mehrere Kühlstrecken umfassen, die von dem rohrförmigen Strang nach der Extrusion durchlaufen werden, und in denen zum Beispiel eine Kühlflüssigkeit zur Kühlung auf die Außenseite des Strangs aufgesprüht wird. Weiterhin kann die erfindungsgemäße Vorrichtung eine Kalibriereinrichtung umfassen, umfassend zum Beispiel eine Kalibrierhülse, zum Beispiel aus Metall, gegen deren Innenseite der rohrförmige Strang nach Verlassen der Extrusionsvorrichtung gepresst wird, zum Beispiel angesaugt wird. Etwaige Kühlstrecken können sich insbesondere stromab der Kalibriereinrichtung befinden.

Erfindungsgemäß wird mittels eines ersten Temperatursensors eine erste Temperatur der Außenseite des rohrförmigen Strangs an einer ersten Position des rohrförmigen Strangs gemessen. Die gemessene erste Temperatur wird mit einer zweiten Temperatur der Außenseite des rohrförmigen Strangs an einer zweiten Position des rohrförmigen Strangs verglichen, wobei die zweite Position in Förderrichtung des rohrförmigen Strangs zu der ersten Position beabstandet ist. Die erste und zweite Position sind Positionen entlang der Förderrichtung des Strangs. Die Positionen sind in Längsrichtung des Strangs zueinander beabstandet. Die zweite Position kann beispielsweise in Förderrichtung des Strangs stromauf der ersten Position angeordnet sein. Sie kann aber auch in Förderrichtung stromab der ersten Position angeordnet sein. Die Temperaturen an der ersten und zweiten Position können insbesondere zur gleichen Zeit gemessen bzw. bestimmt werden. Dies ist aber nicht zwingend. Es wäre vielmehr auch möglich, die erste und zweite Temperatur zu unterschiedlichen Zeitpunkten zu messen bzw. zu bestimmen, zum Beispiel so, dass unter Berücksichtigung der Fördergeschwindigkeit des Strangs derselbe Strangbereich gemessen wird.

Die zweite Temperatur kann gemessen oder anderweitig als bekannt angenommen bzw. bestimmt werden. Zum Beispiel kann an dem Ausgang einer Kalibriereinrichtung die Temperatur einer Kalibrierhülse, gegen die der Strang zur Definierung seiner Außengeometrie gepresst wird, als Außentemperatur des Strangs an dieser Position angenommen werden. Nach der Extrusion kühlt der Strang ab. Die Abkühlung wird in der Regel durch eine oder mehrere von dem Strang durchlaufene Kühlstrecken verstärkt bzw. gesteuert. Die Kühlstrecken wirken in der Regel auf die Außenseite des Strangs und leiten eine Zwangskühlung in das Material ein. Dadurch besitzt der Strang auf seiner Außenseite insbesondere kurz nach Durchlaufen einer Kühlstrecke zunächst eine geringere Temperatur als in seinem von der Kühlung nicht direkt beeinflussten Inneren, insbesondere an seiner Innenseite. Nach dem Ende der Außenkühlung, also nach Verlassen der Kühlstrecke und dem Ende der Zwangskühlung, breitet sich die im Inneren des Strangs herrschende höhere Temperatur wieder nach außen aus. Dadurch steigt die Außentemperatur des Strangs nach der Kühlung zunächst wieder an. Aus der Höhe dieses Temperaturanstiegs kann auf die Temperatur des Strangs in seinem Inneren, insbesondere auf seiner Innenseite, geschlossen werden. Für die Bestimmung der Temperatur innerhalb des rohrförmigen Strangs und/oder auf der Innenseite des rohrförmigen Strangs bekannt für die Berechnung sind neben den Positionen der verglichenen ersten und zweiten Temperatur insbesondere die Fördergeschwindigkeit des Strangs, die Wärmeleitfähigkeit und die Wärmekapazität des Strangmaterials sowie die Wanddicke des rohrförmigen Strangs. Auf Grundlage dieser Parameter kann aus dem Temperaturvergleich auf einen Temperaturunterschied zwischen der Strangaußenseite und der Stranginnenseite und damit auf die Temperatur auf der Innenseite und auch im Inneren des Strangs geschlossen werden. Eine etwaige Energieabgabe des rohrförmigen Strangs an die Umgebung kann dabei vernachlässigt werden. Auf diese Weise kann mittels einer einfach und flexibel zu realisierenden Temperaturmessung der Außenseite des Strangs auch ohne Anordnen eines Sensors im Inneren des Strangs, und damit auch weit stromab der Extrusionsvorrichtung, die Innentemperatur des Strangs zuverlässig ermittelt werden. Hieraus wiederum können wertvolle Informationen über den Produktionsprozess gewonnen werden und als Steuer- oder Regelgrößen für den Prozess verwendet werden. Die Optimierung der eingangs genannten Parameter des minimalen Saggings, des minimalen Energieeintrags und der maximalen Fördergeschwindigkeit des Rohrs ist so besser möglich. Auch können unter Kenntnis des Ausdehnungskoeffizienten die zu erwartenden Abmessungen des rohrförmigen Strangs nach dessen Abkühlung präziser bestimmt werden. Mit Kenntnis der Temperatur in den Wanddicken des rohrförmigen Strangs können auch dessen temperaturabhängige Dämpfung der Terahertzstrahlung und die Veränderung des Brechungsindexes bei der Analyse der Wanddicken und Durchmesserwerte berücksichtigt werden.

Die Position, an der die Temperatur innerhalb des rohrförmigen Strangs und/oder auf der Innenseite des rohrförmigen Strangs bestimmt wird, kann eine dritte Position sein, die in Förderrichtung des rohrförmigen Strangs zu der ersten Position und der zweiten Position beabstandet ist. Für die rechnerische Auswertung einfacher kann es jedoch sein, wenn die Position, an der die Temperatur innerhalb des rohrförmigen Strangs und/oder auf der Innenseite des rohrförmigen Strangs bestimmt wird, gleich der ersten Position oder gleich der zweiten Position ist. Diese Position kann zum Beispiel gleich derjenigen von erster und zweiter Position sein, die in Förderrichtung des Strangs näher zu der Extrusionsvorrichtung angeordnet ist.

Gemäß einer Ausgestaltung kann die zweite Temperatur ebenfalls gemessen werden. Hierzu kann ein zweiter Temperatursensor vorgesehen sein. Durch die ebenfalls erfolgende Messung der zweiten Temperatur ist eine besonders zuverlässige Bestimmung der Innentemperatur möglich.

Es ist nach einer weiteren Ausgestaltung möglich, dass der erste Temperatursensor ebenfalls zum Messen der zweiten Temperatur ausgebildet ist. Dann ist in besonders günstiger Weise nur ein Temperatursensor erforderlich. Die Verwendung nur eines Temperatursensors kann auch hinsichtlich der Messzuverlässigkeit vorteilhaft sein, da keine Verfälschungen des Messergebnisses durch unterschiedliche Charakteristiken bzw. Veränderungen der Temperatursensoren zu erwarten sind.

Zumindest der erste Temperatursensor kann ein berührungsloser Temperatursensor, insbesondere ein pyroelektrischer Sensor (PIR Sensor) sein. Falls auch ein zweiter Temperatursensor vorgesehen ist, kann auch dieser ein berührungsloser Temperatursensor, insbesondere ein pyroelektrischer Sensor, sein. Derartige Sensoren bieten eine einfache und zuverlässige berührungslose Messung auch bei sehr heißen Messobjekten. Außerdem ist mit dieser Sensortechnik in einfacher Weise eine Temperaturmessung an verschiedenen Positionen mit nur einem Temperatursensor möglich, der dann zum Beispiel unter verschiedenen Winkeln Wärmestrahlung der äußeren Oberfläche des Strangs erfasst. Besonders vorteilhaft ist es dann, wenn der Temperatursensor die Wärmestrahlung der Strangoberfläche unter identischen Winkeln, also symmetrisch aufnimmt. Dadurch werden Verfälschungen des Messergebnisses aufgrund eines unterschiedlichen Erfassungswinkels vermieden.

Nach einer weiteren Ausgestaltung kann zumindest der erste Temperatursensor derart angeordnet sein, dass die erste Temperatur gemessen wird, nachdem der rohrförmige Strang eine stromab der Extrusionsvorrichtung angeordnete Kühlstrecke durchlaufen hat. Falls auch ein zweiter Temperatursensor vorhanden ist, kann dieser derart angeordnet sein, dass auch die zweite Temperatur gemessen wird, nachdem der rohrförmige Strang eine stromab der Extrusionsvorrichtung angeordnete Kühlstrecke durchlaufen hat. In der Kühlstrecke wird wie erläutert die Strangaußenseite zur Abkühlung durch Kühlflüssigkeit, zum Beispiel Kühlwasser, besprüht. Insbesondere kann der erste Temperatursensor und gegebenenfalls ein zweiter Temperatursensor derart angeordnet sein, dass die erste Temperatur bzw. die zweite Temperatur gemessen wird, nachdem der rohrförmige Strang eine stromab der Extrusionsvorrichtung angeordnete erste Kühlstrecke durchlaufen hat und bevor der rohrförmige Strang eine zweite stromab der ersten Kühlstrecke angeordnete zweite Kühlstrecke durchläuft. Es erfolgt dann also eine Messung zwischen zwei Kühlstrecken. Wie eingangs erläutert, erlaubt die erfindungsgemäße Messmethode insbesondere nach Abschluss einer (ersten) Kühlung der Strangaußenseite eine zuverlässige Bestimmung der Innentemperatur des Strangs auf Grundlage einer nach Abschluss der Kühlung erfolgenden Wiedererwärmung der Strangaußenseite.

Nach einer besonders praxisgemäßen Ausgestaltung kann die Auswerteeinrichtung dazu ausgebildet sein, die Temperatur innerhalb des rohrförmigen Strangs und/oder auf der Innenseite des rohrförmigen Strangs anhand einer insbesondere iterativen Finite-Elemente-Methode aus dem Vergleich der ersten und zweiten Temperatur zu bestimmen. Solche dem Fachmann an sich bekannten Finite-Elemente-Methoden stellen numerische Rechenverfahren dar, bei denen der zu berechnende Körper, hier der rohrförmige Strang, in endlich viele Teilgebiete aufgeteilt wird. Das physikalische Verhalten dieser sogenannten finiten Elemente kann aufgrund ihrer regelmäßig einfachen Geometrie mit bekannten Ansatzfunktionen gut berechnet werden. Das physikalische Verhalten des Gesamtkörpers, hier die Ausbreitung der höheren Innentemperatur zur Außenseite des rohrförmigen Strangs, kann auf diese Weise gut nachgebildet werden. Bei kleinen Wanddicken im Vergleich zum Durchmesser des rohrförmigen Strangs kann in guter Näherung ein linearer Temperaturverlauf zwischen der Innen- und der Außenseite des rohrförmigen Strangs angenommen werden. Dies erleichtert die rechnerische Bestimmung der Innentemperatur. Als iterative Berechnungsmethode zur Berechnung der Innentemperatur kann beispielsweise im ersten Schritt eine Innentemperatur angenommen werden und mithilfe der Finite-Elemente-Methode ausgerechnet werden, ob diese Innentemperatur zu der gemessenen Außentemperatur passt. Ist dies nicht der Fall, wird die angenommene Innentemperatur verändert und die rechnerische Prüfung erneut vorgenommen. Auf diese Weise kann iterativ die tatsächliche Innentemperatur bestimmt werden.

Nach einer weiteren Ausgestaltung kann vorgesehen sein, dass der erste Temperatursensor die erste Temperatur an mehreren über den Umfang des rohrförmigen Strangs verteilten Orten an der ersten Position misst, und dass die Auswerteeinrichtung dazu ausgebildet ist, die an mehreren über den Umfang des rohrförmigen Strangs verteilten Orten gemessene Temperatur mit der zweiten Temperatur an mehreren über den Umfang des rohrförmigen Strangs verteilten Orten an der zweiten Position zu vergleichen, und aus dem Vergleich die Temperatur innerhalb des rohrförmigen Strangs und/oder auf der Innenseite des rohrförmigen Strangs an mehreren über den Umfang des rohrförmigen Strangs verteilten Orten an der Position des rohrförmigen Strangs zu bestimmen. Auch die zweite Temperatur kann an mehreren über den Umfang des rohrförmigen Strangs verteilten Orten an der zweiten Position gemessen werden, sei dies durch den ersten Temperatursensor oder einen gegebenenfalls vorgesehenen zweiten Temperatursensor. Durch die Messung und Bestimmung der Temperatur über den Umfang können weitere wichtige Informationen über den Produktionsprozess gewonnen werden, insbesondere eine ungleichmäßige Temperaturverteilung über den Umfang, die einerseits einen Hinweis auf den Grad des Saggings des rohrförmigen Strangs liefert und andererseits auf mangelnde Kühlung in diskreten Bereichen des Umfangs des Rohres hindeutet.

Es kann weiter vorgesehen sein, dass zumindest der erste Temperatursensor zumindest abschnittsweise über den Umfang des rohrförmigen Strangs rotierbar ist bzw. rotiert wird. Falls auch ein zweiter Temperatursensor vorgesehen ist, kann auch dieser zumindest abschnittsweise über den Umfang des rohrförmigen Strangs rotierbar sein bzw. rotiert werden. Es wäre aber auch zum Beispiel denkbar, dass ein Temperatursensor rotierbar ausgebildet ist und der andere Temperatursensor feststehend. Die Rotierbarkeit bzw. das Rotieren des ersten und/oder zweiten Temperatursensors kann selbstverständlich über den gesamten Umfang vorliegen bzw. erfolgen. Die erste und/oder zweite Temperatur kann an diskreten Orten über den Umfang oder im Wesentlichen kontinuierlich über den Umfang gemessen werden. Gerade durch die Temperaturbestimmung über den Umfang des rohrförmigen Strangs können die eingangs genannten Faktoren minimales Sagging, also minimale unerwünschte Wanddickenabweichung zwischen einem oberen und einem unteren Wandabschnitt, minimaler Energieeintrag und maximale Fördergeschwindigkeit des Strangs noch besser optimiert werden.

Nach einer weiteren Ausgestaltung kann die Auswerteeinrichtung dazu ausgebildet sein, an der Position des rohrförmigen Strangs, an der die Temperatur innerhalb des rohrförmigen Strangs und/oder auf der Innenseite des rohrförmigen Strangs bestimmt wird, die Temperatur des rohrförmigen Strangs an mehreren Orten innerhalb des rohrförmigen Strangs zu bestimmen. Es kann also ein Temperaturprofil in radialer Strangrichtung bestimmt werden, woraus weitere wichtige Informationen über den Produktionsprozess erlangt werden können. Die Bestimmung der Temperatur im Inneren des rohrförmigen Strangs kann dabei in besonders praxisgemäßer Weise wie erläutert durch eine Finite-Elemente-Methode numerisch berechnet werden, da bei dieser Methode der rohrförmige Strang ohnehin in mehrere Teilgebiete zum Beispiel in radialer Richtung aufgeteilt wird. Für diese einzelnen Teilgebiete kann dann die Temperatur bestimmt werden, und damit ein radiales Temperaturprofil des rohrförmigen Strangs.

Nach einer weiteren Ausgestaltung kann eine Durchmesser- und/oder Wanddickenmesseinrichtung vorgesehen sein, die an der ersten Position und/oder der zweiten Position des rohrförmigen Strangs den Durchmesser und/oder die Wanddicke des rohrförmigen Strangs misst. Die Auswerteeinrichtung kann dann dazu ausgebildet sein, den gemessenen Durchmesser und/oder die gemessene Wanddicke bei der Bestimmung der Temperatur innerhalb des rohrförmigen Strangs und/oder auf der Innenseite des rohrförmigen Strangs zu berücksichtigen. Auch kann die Auswerteeinrichtung dazu ausgebildet sein, die Temperatur innerhalb des rohrförmigen Strangs und/oder auf der Innenseite des rohrförmigen Strangs und ggf. die Temperatur der Außenseite des rohrförmigen Strangs an der ersten und/oder zweiten Position bei der Bestimmung des Durchmessers und/oder der Wanddicke zu berücksichtigen. So ist die Temperatur des Strangmaterials ein wichtiger Wert zur Bestimmung von Geometrieparametern des Strangs. Zum Beispiel ist der Brechungsindex des Strangmaterials temperaturabhängig. Gleichzeitig ist der Brechungsindex ein wichtiger Parameter bei einer Bestimmung der Wanddicke des Strangs, z.B. mittels einer Terahertzstrahlungsmesseinrichtung. Die Durchmesser- und/oder Wanddickenmesseinrichtung kann gemäß einer besonders praxisgemäßen Ausgestaltung eine Terahertzstrahlungsmesseinrichtung umfassen. Wie eingangs erläutert, sind Durchmesser und Wanddicke wichtige Parameter des Produktionsprozesses. Außerdem kann eine genaue Kenntnis des Durchmessers bzw. der Wanddicke wichtig für eine genaue Bestimmung der Temperatur innerhalb oder auf der Innenseite des rohrförmigen Strangs sein, da der Durchmesser und insbesondere die Wanddicke beeinflusst, in welchem Maße sich eine höhere Innentemperatur des Strangs auf die Außenseite ausbreitet. Der Durchmesser und/oder die Wanddicke könnten als Parameter für die Berechnung zwar grundsätzlich als bekannt angenommen werden. Mit der vorgenannten Ausgestaltung wird die Genauigkeit der Temperaturbestimmung allerdings erhöht, da der tatsächliche Durchmesser bzw. die tatsächliche Wanddicke gemessen wird und so etwaige Abweichungen von einem erwarteten Durchmesser bzw. einer erwarteten Wanddicke berücksichtigt werden. Die Durchmesser- und/oder Wanddickenmessung kann zum Beispiel als Laufzeitmessung von an Grenzflächen des Strangs, insbesondere der Außen- und Innenseiten des Strangs, reflektierter Terahertzstrahlung erfolgen. Die Terahertzstrahlungsmesseinrichtung kann hierzu zum Beispiel einen Terahertztransceiver umfassen, der also einen Terahertzsender und einen Terahertzempfänger umfasst. Die Terahertzstrahlungsmesseinrichtung kann um den Strang rotiert werden, sodass der Durchmesser bzw. die Wanddicke an mehreren über den Umfang des Strangs verteilt angeordneten Orten bestimmt werden kann. In besonders einfacher Weise kann der erste und/oder zweite Temperatursensor in die Terahertzstrahlungsmesseinrichtung integriert sein. Er kann dann gegebenenfalls gemeinsam mit dieser rotieren. So kann in besonders einfacher Weise sichergestellt werden, dass der Durchmesser bzw. die Wanddicke und die Temperatur an denselben Orten über den Umfang des Strangs gemessen werden. Die Durchmesser- und/oder Wanddickenmesseinrichtung kann zum Beispiel ausgestaltet sein wie in WO 2016/139155 A1 erläutert.

Nach einer weiteren Ausgestaltung kann die Auswerteeinrichtung weiterhin dazu ausgebildet sein, auf Grundlage des temperaturabhängigen Ausdehnungskoeffizienten des Materials des rohrförmigen Strangs eine erwartete Schrumpfung des rohrförmigen Strangs ausgehend von der Position des rohrförmigen Strangs, an der die Temperatur innerhalb des rohrförmigen Strangs und/oder auf der Innenseite des rohrförmigen Strangs bestimmt wird, bis zum Erreichen seiner endgültigen Form zu ermitteln. Das Strangmaterial schrumpft im Zuge seiner Abkühlung bis zum Erreichen seiner endgültigen Form, beispielsweise wenn der Strang Raumtemperatur erreicht hat. Ist der temperaturabhängige Ausdehnungskoeffizient des Strangmaterials bekannt, kann gemäß der vorgenannten Ausgestaltung also anhand der erfindungsgemäß ermittelten Temperatur des Strangs innerhalb des rohrförmigen Strangs und/oder auf der Innenseite des rohrförmigen Strangs und gegebenenfalls auch unter Berücksichtigung der gemessenen Temperatur auf der Außenseite die bis zum Erreichen der endgültigen Form des Strangs zu erwartende Schrumpfung bestimmt werden. Dies wiederum kann in vorteilhafter Weise genutzt werden, um bestimmte Geometrieparameter des Strangs nach Erreichen seiner endgültigen Form vorherzusagen. So kann gemäß einer weiteren Ausgestaltung die Auswerteeinrichtung weiterhin dazu ausgebildet sein, unter Berücksichtigung von an der ersten Position und/oder der zweiten Position des rohrförmigen Strangs gemessenem Durchmesser und/oder gemessener Wanddicke des rohrförmigen Strangs und unter Berücksichtigung der ermittelten erwarteten Schrumpfung einen Durchmesser und/oder eine Wanddicke des rohrförmigen Strangs nach Erreichen seiner endgültigen Form zu ermitteln.

Gemäß einer weiteren Ausgestaltung kann die Auswerteeinrichtung dazu ausgebildet sein, anhand der bestimmten Temperatur den Brechungsindex des Materials des rohrförmigen Strangs zu bestimmen. Der Brechungsindex ist bekanntlich temperaturabhängig. Dies bedeutet, dass aus der Temperaturmessung auf den Brechungsindex des Strangmaterials an der Position bzw. am Ort der Temperaturbestimmung geschlossen werden kann. Dies kann zum Beispiel bei einer Wanddickenmessung berücksichtigt werden, die den Brechungsindex als einen Parameter verwendet. Die Wanddickenmessung ist dadurch genauer möglich. Beispielsweise kann der Brechungsindex an mehreren über die Wanddicke des Strangs verteilten Orten bestimmt werden. Es kann also eine Brechungsindexverteilung ermittelt werden. Auch kann der Brechungsindex an mehreren über den Umfang des Strangs verteilten Orten ermittelt werden und auch hieraus eine Brechungsindexverteilung ermittelt werden. Aus diesen Brechungsindexverteilungen sind weitere wertvolle Informationen für den Produktionsprozess zu gewinnen, z.B. die Zusammensetzung des Materials und dessen Konstanz über den Produktionsprozess. Darüber hinaus kann die temperaturabhängige Absorption der Terahertzstrahlung bestimmt werden und umgekehrt kann durch die Messung der mittleren Rohrtemperatur eine Vorhersage für die zu erwartende Absorption abgeleitet werden. Werden Rohre aus Materialien gefertigt, bei denen ein starker temperaturabhängiger Anstieg der Absorption vorliegt, kann durch die Messung und Limitierung der Temperatur des Materials sichergestellt werden, dass verlässliche Wanddicken- und Durchmessermesswerte generiert werden können. Mit Kenntnis des temperaturabhängigen Ausdehnungskoeffizienten des Materials kann auch abgeleitet werden, in welchem Umfang dessen Schrumpfung vom Messort bei höherer Raumtemperatur des Materials bis zu dessen endgültiger Abkühlung zu erwarten sein wird.

Gemäß einer weiteren Ausgestaltung kann die Vorrichtung weiterhin eine Steuer- und/oder Regeleinrichtung umfassen, die die Extrusionsvorrichtung auf Grundlage der bestimmten Temperatur innerhalb des rohrförmigen Strangs und/oder auf der Innenseite des rohrförmigen Strangs steuert und/oder regelt. Auf diese Weise ist auf Grundlage der erfindungsgemäß gewonnenen Informationen über den Produktionsprozess eine verbesserte Steuerung bzw. Regelung des Prozesses, insbesondere der Extrusionsvorrichtung möglich.

Die erfindungsgemäße Vorrichtung kann zum Durchführen des erfindungsgemäßen Verfahrens ausgebildet sein. Das erfindungsgemäße Verfahren kann entsprechend mit der erfindungsgemäßen Vorrichtung durchgeführt werden.

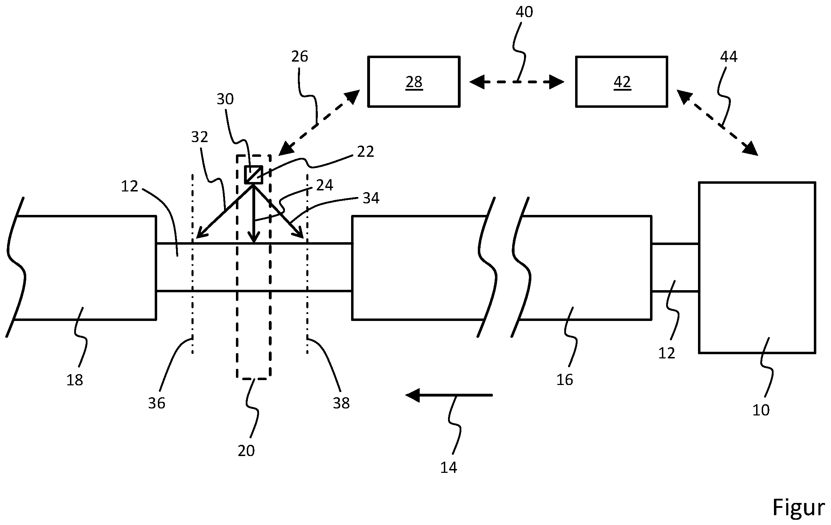

Ein Ausführungsbeispiel der Erfindung wird nachfolgend anhand einer Zeichnung näher erläutert. Die einzige Figur zeigt schematisch eine erfindungsgemäße Vorrichtung in einer Seitenansicht.

Die in der Figur dargestellte Vorrichtung umfasst eine Extrusionsvorrichtung 10 mit einer Fördereinrichtung. Ein aus der Extrusionsvorrichtung 10 austretender rohrförmiger Strang 12, vorliegend ein Kunststoffrohr 12, wird in einer Förderrichtung 14 entlang seiner Längsachse gefördert. Dabei durchläuft der Strang 12 eine erste Kühlstrecke 16 und eine zweite Kühlstrecke 18, in denen jeweils eine Kühlflüssigkeit zur Kühlung auf die Außenseite des Strangs 12 gesprüht wird. Zwischen der Extrusionsvorrichtung 10 und der ersten Kühlstrecke 16 kann eine Kalibriereinrichtung (nicht dargestellt) mit einer zum Beispiel metallischen Kalibrierhülse angeordnet sein, gegen deren Innenwand der Strang 12 zur äußeren Formgebung gedrückt wird, zum Beispiel angesaugt wird. In einem Bereich zwischen der ersten Kühlstrecke 16 und der zweiten Kühlstrecke 18 ist der Strang 12 von außen zugänglich. In diesem Bereich ist eine gestrichelt eingezeichnete Durchmesser- und/oder Wanddickenmesseinrichtung 20 vorgesehen, umfassend einen Terahertztransceiver 22, der Terahertzstrahlung auf den rohrförmigen Strang 12 aussendet, wie in der Figur bei dem Pfeil 24 zu erkennen. Die Terahertzstrahlung durchdringt den rohrförmigen Strang 12 und wird an den Grenzflächen des Strangs 12, insbesondere seinen Außen- und Innenseiten reflektiert. Die reflektierte Terahertzstrahlung wird wiederum von dem Terahertztransceiver 22 empfangen. Über eine Datenverbindung 26 steht die Messeinrichtung 20 mit einer Auswerteeinrichtung 28 in Verbindung. Die Auswerteeinrichtung 28 bestimmt anhand der reflektierten Terahertzstrahlung mindestens die Wanddicke der dem Terahertztransceiver 22 zugewandten Wand des Strangs 12 und ggf. auch die Wanddicke, der dem Terahertztransceiver 22 gegenüberliegenden Wand des Strangs 12 aber auch dessen Durchmesser.

Die Messeinrichtung 20 umfasst außerdem einen ersten Temperatursensor 30, in dem vorliegenden Beispiel einen pyroelektrischen Temperatursensor 30. Der erste Temperatursensor 30 misst entlang der durch die Pfeile 32 und 34 gekennzeichneten Richtungen die von dem Strang 12 ausgehende Wärmestrahlung und damit eine erste Temperatur der Außenseite des Strangs 12 an einer ersten Position 36 in Längsrichtung des Strangs 12 sowie eine zweite Temperatur der Außenseite des Strangs 12 an einer zweiten Position 38 in Längsrichtung des Strangs 12. Wie in der Figur ersichtlich, misst der erste Temperatursensor 30 die erste Temperatur und die zweite Temperatur entlang der Richtungen 32 und 34 symmetrisch unter gleichen Winkeln zur Strangoberfläche. Die Messwerte der ersten und zweiten Temperatur werden über die Verbindung 26 ebenfalls der Auswerteeinrichtung 28 zur Verfügung gestellt. Die Auswerteeinrichtung 28 berechnet aus einem Vergleich der gemessenen ersten und zweiten Temperatur und unter Berücksichtigung der Fördergeschwindigkeit des Strangs 12, der Wärmekapazität und der Wärmeleitfähigkeit des Strangmaterials sowie der gemessenen Wanddicke und dem Durchmesser des Strangs 12 die Temperatur innerhalb des rohrförmigen Strangs 12 und/oder auf der Innenseite des rohrförmigen Strangs 12 beispielsweise an der zweiten Position 38 des rohrförmigen Strangs 12. Die Berechnung kann wie erläutert auf Grundlage von iterativen Finite-Elemente-Methoden erfolgen.

Es ist zum Beispiel möglich, ein radiales Temperaturprofil zu bestimmen über beispielsweise den dem Temperatursensor 30 zugewandten Wandabschnitt des rohrförmigen Strangs 12. Außerdem ist es möglich, dass der Transceiver 22 und der Temperatursensor 30 um die Längsachse des Strangs 12 rotiert werden, sodass sowohl eine Wanddickenmessung als auch eine Messung der ersten und zweiten Temperatur an mehreren über den Umfang des Strangs 12 verteilten Orten an der ersten bzw. zweiten Position erfolgen kann. Auf diese Weise kann auch ein Temperaturprofil des Strangs 12 im Inneren oder an seiner Innenseite über den Umfang des Strangs 12 berechnet werden.

Auf Grundlage der ermittelten Temperaturwerte im Inneren des Strangs 12 bzw. an seiner Innenseite können der Brechungsindex, die Absorption und die Schrumpfung des Strangmaterials, welche bekanntlich temperaturabhängig sind, genauer bestimmt werden. Mit besserer Kenntnis der genannten Eigenschaften können deutlich genauere Wanddicken- und Durchmesserwerte generiert werden, sowohl für die Heißwerte am Messort als auch vorhergesagt werden nach dessen Abkühlung, z. B. auf Raumtemperatur.

Die durch die Auswerteeinrichtung 28 ermittelten Werte für die Wanddicke und die Temperatur werden in dem gezeigten Beispiel über eine Datenverbindung 40 einer Steuer- und/oder Regeleinrichtung 42 der Vorrichtung zur Verfügung gestellt. Die Steuer- und/oder Regeleinrichtung 42 kann auf dieser Grundlage über eine weitere Datenverbindung 44 die Extrusionsvorrichtung 10 und beispielsweise eine von dieser umfasste Fördereinrichtung für den Strang 10 steuern und/oder regeln.

### Bezugszeichenliste

- 10: Extrusionsvorrichtung
- 12: rohrförmiger Strang
- 14: Förderrichtung
- 16: erste Kühlstrecke
- 18: zweite Kühlstrecke
- 20: Durchmesser- und/oder Wanddickenmesseinrichtung
- 22: Terahertztransceiver
- 24: Terahertzstrahlung
- 26: Datenverbindung
- 28: Auswerteeinrichtung
- 30: Temperatursensor
- 32: Temperaturmessrichtung
- 34: Temperaturmessrichtung
- 36: erste Position
- 38: zweite Position
- 40: Datenverbindung
- 42: Steuer und/oder Regeleinrichtung
- 44: Datenverbindung

## Patentansprüche

1. Vorrichtung zum Bestimmen der Temperatur eines aus einer Extrusionsvorrichtung (10) geförderten rohrförmigen Strangs (12), umfassend einen ersten Temperatursensor (30) zum Messen einer ersten Temperatur der Außenseite des rohrförmigen Strangs (12) an einer ersten Position des rohrförmigen Strangs (12), und eine Auswerteeinrichtung (28), **dadurch gekennzeichnet , dass** die Auswerteeinrichtung (28) dazu ausgebildet ist, die erste Temperatur mit einer zweiten Temperatur der Außenseite des rohrförmigen Strangs (12) an einer in Förderrichtung (14) des rohrförmigen Strangs (12) zu der ersten Position beabstandeten zweiten Position des rohrförmigen Strangs (12) zu vergleichen, und aus dem Vergleich der ersten und zweiten Temperatur die Temperatur innerhalb des rohrförmigen Strangs (12) und/oder auf der Innenseite des rohrförmigen Strangs (12) an einer Position des rohrförmigen Strangs (12) zu bestimmen.

2. Vorrichtung nach Anspruch 1, **dadurch gekennzeichnet, dass** ein zweiter Temperatursensor (30) zum Messen der zweiten Temperatur vorgesehen ist oder dass der erste Temperatursensor (30) ebenfalls zum Messen der zweiten Temperatur ausgebildet ist.

3. Vorrichtung nach einem der vorhergehenden Ansprüche, **dadurch gekennzeichnet, dass** zumindest der erste Temperatursensor (30) derart angeordnet ist, dass die erste Temperatur gemessen wird, nachdem der rohrförmige Strang (12) eine stromab der Extrusionsvorrichtung (10) angeordnete Kühlstrecke (16) durchlaufen hat.

4. Vorrichtung nach einem der vorhergehenden Ansprüche, **dadurch gekennzeichnet, dass** die Auswerteeinrichtung (28) dazu ausgebildet ist, die Temperatur innerhalb des rohrförmigen Strangs (12) und/oder auf der Innenseite des rohrförmigen Strangs (12) anhand einer Finite-Elemente-Methode aus dem Vergleich der ersten und zweiten Temperatur zu bestimmen.

5. Vorrichtung nach einem der vorhergehenden Ansprüche, **dadurch gekennzeichnet, dass** der erste Temperatursensor (30) die erste Temperatur an mehreren über den Umfang des rohrförmigen Strangs (12) verteilten Orten an der ersten Position misst, und dass die Auswerteeinrichtung (28) dazu ausgebildet ist, die an mehreren über den Umfang des rohrförmigen Strangs (12) verteilten Orten gemessene Temperatur mit der zweiten Temperatur an mehreren über den Umfang des rohrförmigen Strangs (12) verteilten Orten an der zweiten Position zu vergleichen, und aus dem Vergleich die Temperatur innerhalb des rohrförmigen Strangs (12) und/oder auf der Innenseite des rohrförmigen Strangs (12) an mehreren über den Umfang des rohrförmigen Strangs (12) verteilten Orten an der Position des rohrförmigen Strangs (12) zu bestimmen.

6. Vorrichtung nach Anspruch 5, **dadurch gekennzeichnet, dass** zumindest der erste Temperatursensor (30) zumindest abschnittsweise über den Umfang des rohrförmigen Strangs (12) rotierbar ist.

7. Vorrichtung nach einem der vorhergehenden Ansprüche, **dadurch gekennzeichnet, dass** die Auswerteeinrichtung (28) weiterhin dazu ausgebildet ist, an der Position des rohrförmigen Strangs (12), an der die Temperatur innerhalb des rohrförmigen Strangs (12) und/oder auf der Innenseite des rohrförmigen Strangs (12) bestimmt wird, die Temperatur des rohrförmigen Strangs (12) an mehreren Orten innerhalb des rohrförmigen Strangs (12) zu bestimmen.

8. Vorrichtung nach einem der vorhergehenden Ansprüche, **dadurch gekennzeichnet, dass** weiterhin eine Durchmesser- und/oder Wanddickenmesseinrichtung (20) vorgesehen ist, die an der ersten Position und/oder der zweiten Position des rohrförmigen Strangs (12) den Durchmesser und/oder die Wanddicke des rohrförmigen Strangs (12) misst.

9. Vorrichtung nach Anspruch 8, **dadurch gekennzeichnet, dass** die Auswerteeinrichtung (28) dazu ausgebildet ist, den gemessenen Durchmesser und/oder die gemessene Wanddicke bei der Bestimmung der Temperatur innerhalb des rohrförmigen Strangs (12) und/oder auf der Innenseite des rohrförmigen Strangs (12) zu berücksichtigen und/oder dass die Auswerteeinrichtung (28) dazu ausgebildet ist, die Temperatur innerhalb des rohrförmigen Strangs (12) und/oder auf der Innenseite des rohrförmigen Strangs (12) bei der Bestimmung des Durchmessers und/oder der Wanddicke zu berücksichtigen.

10. Vorrichtung nach einem der Ansprüche 8 oder 9, **dadurch gekennzeichnet, dass** die Durchmesser- und/oder Wanddickenmesseinrichtung (20) eine Terahertzstrahlungsmesseinrichtung umfasst.

11. Vorrichtung nach einem der vorhergehenden Ansprüche, **dadurch gekennzeichnet, dass** die Auswerteeinrichtung (28) weiterhin dazu ausgebildet ist, auf Grundlage des temperaturabhängigen Ausdehnungskoeffizienten des Materials des rohrförmigen Strangs (12) eine erwartete Schrumpfung des rohrförmigen Strangs (12) ausgehend von der Position des rohrförmigen Strangs (12), an der die Temperatur innerhalb des rohrförmigen Strangs (12) und/oder auf der Innenseite des rohrförmigen Strangs (12) bestimmt wird, bis zum Erreichen seiner endgültigen Form zu ermitteln.

12. Vorrichtung nach den Ansprüchen 8 und 11, **dadurch gekennzeichnet, dass** die Auswerteeinrichtung (28) weiterhin dazu ausgebildet ist, unter Berücksichtigung von an der ersten Position und/oder der zweiten Position des rohrförmigen Strangs (12) gemessenem Durchmesser und/oder gemessener Wanddicke des rohrförmigen Strangs (12) und unter Berücksichtigung der ermittelten erwarteten Schrumpfung einen Durchmesser und/oder eine Wanddicke des rohrförmigen Strangs nach Erreichen seiner endgültigen Form zu ermitteln.

13. Vorrichtung nach einem der vorhergehenden Ansprüche, **dadurch gekennzeichnet, dass** die Auswerteeinrichtung (28) weiterhin dazu ausgebildet ist, anhand der bestimmten Temperatur den Brechungsindex des Materials des rohrförmigen Strangs (12) zu bestimmen.

14. Vorrichtung nach einem der vorhergehenden Ansprüche, **dadurch gekennzeichnet, dass** weiterhin eine Steuer- und/oder Regeleinrichtung (42) vorgesehen ist, die die Extrusionsvorrichtung (10) auf Grundlage der bestimmten Temperatur innerhalb des rohrförmigen Strangs (12) und/oder auf der Innenseite des rohrförmigen Strangs (12) steuert und/oder regelt.

15. Verfahren zum Bestimmen der Temperatur eines aus einer Extrusionsvorrichtung (10) geförderten rohrförmigen Strangs (12),
wobei eine erste Temperatur der Außenseite des rohrförmigen Strangs (12) an einer ersten Position des rohrförmigen Strangs (12) gemessen wird, **dadurch gekennzeichnet,**
**dass** die erste Temperatur mit einer zweiten Temperatur der Außenseite des rohrförmigen Strangs (12) an einer in Förderrichtung (14) des rohrförmigen Strangs (12) zu der ersten Position beabstandeten zweiten Position des rohrförmigen Strangs (12) verglichen wird, und dass aus dem Vergleich der ersten und zweiten Temperatur die Temperatur innerhalb des rohrförmigen Strangs (12) und/oder auf der Innenseite des rohrförmigen Strangs (12) an einer Position des rohrförmigen Strangs (12) bestimmt wird.

16. Verfahren nach Anspruch 15, **dadurch gekennzeichnet, dass** zumindest die erste Temperatur gemessen wird, nachdem der rohrförmige Strang eine stromab der Extrusionsvorrichtung (10) angeordnete Kühlstrecke (16) durchlaufen hat.

17. Verfahren nach einem der Ansprüche 15 oder 16, **dadurch gekennzeichnet, dass** die Temperatur innerhalb des rohrförmigen Strangs (12) und/oder auf der Innenseite des rohrförmigen Strangs (12) anhand einer Finite-Elemente-Methode aus dem Vergleich der ersten und zweiten Temperatur bestimmt wird.

18. Verfahren nach einem der Ansprüche 15 bis 17, **dadurch gekennzeichnet, dass** die erste Temperatur an mehreren über den Umfang des rohrförmigen Strangs (12) verteilten Orten an der ersten Position gemessen wird, und dass die an mehreren über den Umfang des rohrförmigen Strangs (12) verteilten Orten gemessene Temperatur mit der zweiten Temperatur ebenfalls an mehreren über den Umfang des rohrförmigen Strangs (12) verteilten Orten an der zweiten Position verglichen wird, und dass aus dem Vergleich die Temperatur innerhalb des rohrförmigen Strangs (12) und/oder auf der Innenseite des rohrförmigen Strangs (12) an mehreren über den Umfang des rohrförmigen Strangs (12) verteilten Orten an der Position des rohrförmigen Strangs (12) bestimmt wird.

19. Verfahren nach einem der Ansprüche 15 bis 18, **dadurch gekennzeichnet, dass** an der Position des rohrförmigen Strangs (12), an der die Temperatur innerhalb des rohrförmigen Strangs (12) und/oder auf der Innenseite des rohrförmigen Strangs (12) bestimmt wird, die Temperatur des rohrförmigen Strangs (12) an mehreren Orten innerhalb des rohrförmigen Strangs (12) bestimmt wird.

20. Verfahren nach einem der Ansprüche 15 bis 19, **dadurch gekennzeichnet, dass** an der ersten Position und/oder der zweiten Position des rohrförmigen Strangs (12) weiterhin der Durchmesser und/oder die Wanddicke des rohrförmigen Strangs (12) gemessen wird

21. Verfahren nach Anspruch 20, **dadurch gekennzeichnet, dass** der gemessene Durchmesser und/oder die gemessene Wanddicke bei der Bestimmung der Temperatur innerhalb des rohrförmigen Strangs (12) und/oder auf der Innenseite des rohrförmigen Strangs (12) berücksichtigt wird und/oder dass die Temperatur innerhalb des rohrförmigen Strangs und/oder auf der Innenseite des rohrförmigen Strangs bei der Bestimmung des Durchmessers und/oder der Wanddicke berücksichtigt wird.

22. Verfahren nach einem der Ansprüche 15 bis 21, **dadurch gekennzeichnet, dass** auf Grundlage des temperaturabhängigen Ausdehnungskoeffizienten des Materials des rohrförmigen Strangs (12) eine erwartete Schrumpfung des rohrförmigen Strangs (12) ausgehend von der Position des rohrförmigen Strangs (12), an der die Temperatur innerhalb des rohrförmigen Strangs (12) und/oder auf der Innenseite des rohrförmigen Strangs (12) bestimmt wird, bis zum Erreichen seiner endgültigen Form ermittelt wird.

23. Verfahren nach den Ansprüchen 20 und22, **dadurch gekennzeichnet, dass** unter Berücksichtigung von an der ersten Position und/oder der zweiten Position des rohrförmigen Strangs (12) gemessenem Durchmesser und/oder gemessener Wanddicke des rohrförmigen Strangs (12) und unter Berücksichtigung der ermittelten erwarteten Schrumpfung ein Durchmesser und/oder eine Wanddicke des rohrförmigen Strangs nach Erreichen seiner endgültigen Form ermittelt wird.

24. Verfahren nach einem der Ansprüche 15 bis 23, **dadurch gekennzeichnet, dass** anhand der bestimmten Temperatur der Brechungsindex des Materials des rohrförmigen Strangs (12) bestimmt wird.

25. Verfahren nach einem der Ansprüche 15 bis 24, **dadurch gekennzeichnet, dass** die Extrusionsvorrichtung (10) auf Grundlage der bestimmten Temperatur innerhalb des rohrförmigen Strangs (12) und/oder auf der Innenseite des rohrförmigen Strangs (12) gesteuert und/oder geregelt wird.

## Claims

1. A device for determining the temperature of a tubular strand (12) conveyed out of an extrusion device (10), comprising a first temperature sensor (30) for measuring a first temperature of the outer face of the tubular strand (12) at a first position of the tubular strand (12), and an evaluation apparatus (28), **characterized in that** the evaluation apparatus (28) is designed to compare the first temperature with a second temperature of the outer face of the tubular strand (12) at a second position of the tubular strand (12) that is at a distance from the first position in the conveying direction (14) of the tubular strand (12), and to determine the temperature inside the tubular strand (12) and/or on the inner face of the tubular strand (12) at a position of the tubular strand (12) from the comparison of the first and second temperature.

2. The device according to claim 1, **characterized in that** a second temperature sensor (30) is provided for measuring the second temperature or **in that** the first temperature sensor (30) is also designed to measure the second temperature.

3. The device according to one of the preceding claims, **characterized in that** at least the first temperature sensor (30) is arranged such that the first temperature is measured after the tubular strand (12) has travelled through a cooling section (16) arranged downstream of the extrusion device (10).

4. The device according to one of the preceding claims, **characterized in that** the evaluation apparatus (28) is designed to determine the temperature inside the tubular strand (12) and/or on the inner face of the tubular strand (12) from the comparison of the first and second temperature using a finite element method.

5. The device according to one of the preceding claims, **characterized in that** the first temperature sensor (30) measures the first temperature at multiple locations distributed over the circumference of the tubular strand (12) at the first position, and **in that** the evaluation apparatus (28) is designed to compare the temperature measured at multiple locations distributed over the circumference of the tubular strand (12) with the second temperature at multiple locations distributed over the circumference of the tubular strand (12) at the second position, and to determine, from the comparison, the temperature inside the tubular strand (12) and/or on the inner face of the tubular strand (12) at multiple locations distributed over the circumference of the tubular strand (12) at the position of the tubular strand (12).

6. The device according to claim 5, **characterized in that** at least the first temperature sensor (30) can be rotated at least in portions over the circumference of the tubular strand (12).

7. The device according to one of the preceding claims, **characterized in that** the evaluation apparatus (28) is further designed to determine the temperature of the tubular strand (12) at multiple locations inside the tubular strand (12) at the position of the tubular strand (12) at which the temperature inside the tubular strand (12) and/or on the inner face of the tubular strand (12) is determined.

8. The device according to one of the preceding claims, **characterized in that** a diameter and/or wall thickness measuring apparatus (20) is further provided, which measures the diameter and/or wall thickness of the tubular strand (12) at the first position and/or second position of the tubular strand (12).

9. The device according to claim 8, **characterized in that** the evaluation apparatus (28) is designed to take into account the measured diameter and/or the measured wall thickness when determining the temperature inside the tubular strand (12) and/or on the inner face of the tubular strand (12) and/or **in that** the evaluation apparatus (28) is designed to take into account the temperature inside the tubular strand (12) and/or on the inner face of the tubular strand (12) when determining the diameter and/or wall thickness.

10. The device according to one of claims 8 or 9, **characterized in that** the diameter and/or wall thickness measuring apparatus (20) comprises a terahertz radiation measuring apparatus.

11. The device according to one of the preceding claims, **characterized in that** the evaluation apparatus (28) is further designed, on the basis of the temperature-dependent expansion coefficient of the material of the tubular strand (12), to ascertain an expected shrinkage of the tubular strand (12) proceeding from the position of the tubular strand (12) at which the temperature inside the tubular strand (12) and/or on the inner face of the tubular strand (12) is determined until it has achieved its final shape.

12. The device according to claims 8 and 11, **characterized in that** the evaluation apparatus (28) is further designed to ascertain a diameter and/or wall thickness of the tubular strand after it has achieved its final shape taking into account the diameter and/or wall thickness of the tubular strand (12) measured at the first position and/or the second position of the tubular strand (12) and taking into account the ascertained expected shrinkage.

13. The device according to one of the preceding claims, **characterized in that** the evaluation apparatus (28) is further designed to determine the refractive index of the material of the tubular strand (12) based on the determined temperature.

14. The device according to one of the preceding claims, **characterized in that** an open-loop and/or closed-loop control apparatus (42) is further provided, which controls the extrusion device (10) in an open-loop and/or closed-loop manner on the basis of the determined temperature inside the tubular strand (12) and/or on the inner face of the tubular strand (12).

15. A method for determining the temperature of a tubular strand (12) conveyed out of an extrusion device (10), wherein a first temperature of the outer face of the tubular strand (12) is measured at a first position of the tubular strand (12), **characterized in that** the first temperature is compared with a second temperature of the outer face of the tubular strand (12) at a second position of the tubular strand (12) that is at a distance from the first position in the conveying direction (14) of the tubular strand (12), and **in that** the temperature inside the tubular strand (12) and/or on the inner face of the tubular strand (12) is determined at a position of the tubular strand (12) from the comparison of the first and second temperature.

16. The method according to claim 15, **characterized in that** at least the first temperature is measured after the tubular strand has travelled through a cooling section (16) arranged downstream of the extrusion device (10).

17. The method according to one of claims 15 or 16, **characterized in that** the temperature inside the tubular strand (12) and/or on the inner face of the tubular strand (12) is determined from the comparison of the first and second temperature using a finite element method.

18. The method according to one of claims 15 to 17, **characterized in that** the first temperature is measured at multiple locations distributed over the circumference of the tubular strand (12) at the first position, and **in that** the temperature measured at multiple locations distributed over the circumference of the tubular strand (12) is compared with the second temperature also at multiple locations distributed over the circumference of the tubular strand (12) at the second position, and **in that** the temperature inside the tubular strand (12) and/or on the inner face of the tubular strand (12) is determined from the comparison at multiple locations distributed over the circumference of the tubular strand (12) at the position of the tubular strand (12).

19. The method according to one of claims 15 to 18, **characterized in that** the temperature of the tubular strand (12) at multiple locations inside the tubular strand (12) is determined at the position of the tubular strand (12) at which the temperature inside the tubular strand (12) and/or on the inner face of the tubular strand (12) is determined.

20. The method according to one of claims 15 to 19, **characterized in that** the diameter and/or wall thickness of the tubular strand (12) is further measured at the first position and/or second position of the tubular strand (12).

21. The method according to claim 20, **characterized in that** the measured diameter and/or the measured wall thickness is taken into account when determining the temperature inside the tubular strand (12) and/or on the inner face of the tubular strand (12) and/or **in that** the temperature inside the tubular strand and/or on the inner face of the tubular strand is taken into account when determining the diameter and/or wall thickness.

22. The method according to one of claims 15 to 21, **characterized in that** an expected shrinkage of the tubular strand (12) proceeding from the position of the tubular strand (12) at which the temperature inside the tubular strand (12) and/or on the inner face of the tubular strand (12) is determined until it has achieved its final shape is ascertained on the basis of the temperature-dependent expansion coefficient of the material of the tubular strand (12).

23. The method according to claims 20 and 22, **characterized in that** a diameter and/or wall thickness of the tubular strand after it has achieved its final shape is ascertained taking into account the diameter and/or wall thickness of the tubular strand (12) measured at the first position and/or the second position of the tubular strand (12) and taking into account the ascertained expected shrinkage.

24. The method according to one of claims 15 to 23, **characterized in that** the refractive index of the material of the tubular strand (12) is determined based on the determined temperature.

25. The method according to one of claims 15 to 24, **characterized in that** the extrusion device (10) is controlled in an open-loop and/or closed-loop manner on the basis of the determined temperature inside the tubular strand (12) and/or on the inner face of the tubular strand (12).

## Revendications

1. Dispositif de détermination de la température d'un toron tubulaire (12) transporté hors d'un dispositif d'extrusion (10), comportant un premier capteur de température (30) destiné à mesurer une première température du côté extérieur du toron tubulaire (12) à une première position du toron tubulaire (12), et un moyen d'évaluation (28), **caractérisé en ce que** le moyen d'évaluation (28) est conçu pour comparer la première température avec une deuxième température du côté extérieur du toron tubulaire (12) à une deuxième position du toron tubulaire (12), laquelle est espacée de la première position dans la direction de transport (14) du toron tubulaire (12), et pour déterminer la température à l'intérieur du toron tubulaire (12) et/ou sur le côté intérieur du toron tubulaire (12) à une position du toron tubulaire (12) à partir de la comparaison de la première et de la deuxième température.

2. Dispositif selon la revendication 1, **caractérisé en ce qu'**il est prévu un deuxième capteur de température (30) destiné à mesurer la deuxième température ou **en ce que** le premier capteur de température (30) est également conçu pour mesurer la deuxième température.

3. Dispositif selon l'une des revendications précédentes, **caractérisé en ce qu'**au moins le premier capteur de température (30) est disposé de telle façon que la première température est mesurée après que le toron tubulaire (12) a traversé un trajet de refroidissement (16) disposé en aval du dispositif d'extrusion (10).

4. Dispositif selon l'une des revendications précédentes, **caractérisé en ce que** le moyen d'évaluation (28) est conçu pour déterminer la température à l'intérieur du toron tubulaire (12) et/ou sur le côté intérieur du toron tubulaire (12) à l'aide d'une méthode des éléments finis à partir de la comparaison de la première et de la deuxième température.

5. Dispositif selon l'une des revendications précédentes, **caractérisé en ce que** le premier capteur de température (30) mesure la première température à plusieurs endroits répartis sur la circonférence du toron tubulaire (12) à la première position, et **en ce que** le moyen d'évaluation (28) est conçu pour comparer la température mesurée à plusieurs endroits répartis sur la circonférence du toron tubulaire (12) avec la deuxième température à plusieurs endroits répartis sur la circonférence du toron tubulaire (12) à la deuxième position, et pour déterminer la température à l'intérieur du toron tubulaire (12) et/ou sur le côté intérieur du toron tubulaire (12) à plusieurs endroits répartis sur la circonférence du toron tubulaire (12) à la position du toron tubulaire (12) à partir de la comparaison.

6. Dispositif selon la revendication 5, **caractérisé en ce qu'**au moins le premier capteur de température (30) est rotatif au moins par sections sur la circonférence du toron tubulaire (12).

7. Dispositif selon l'une des revendications précédentes, **caractérisé en ce que** le moyen d'évaluation (28) est en outre conçu pour déterminer la température du toron tubulaire (12) à plusieurs endroits à l'intérieur du toron tubulaire (12) à la position du toron tubulaire (12) à laquelle la température à l'intérieur du toron tubulaire (12) et/ou sur le côté intérieur du toron tubulaire (12) est déterminée.

8. Dispositif selon l'une des revendications précédentes, **caractérisé en ce qu'**il est également prévu un moyen de mesure de diamètre et/ou d'épaisseur de paroi (20), lequel mesure le diamètre et/ou l'épaisseur de paroi du toron tubulaire (12) à la première position et/ou à la deuxième position du toron tubulaire (12).

9. Dispositif selon la revendication 8, **caractérisé en ce que** le moyen d'évaluation (28) est conçu pour tenir compte du diamètre mesuré et/ou de l'épaisseur de paroi mesurée lors de la détermination de la température à l'intérieur du toron tubulaire (12) et/ou sur le côté intérieur du toron tubulaire (12) et/ou **en ce que** le moyen d'évaluation (28) est conçu pour tenir compte de la température à l'intérieur du toron tubulaire (12) et/ou sur le côté intérieur du toron tubulaire (12) lors de la détermination du diamètre et/ou de l'épaisseur de paroi.

10. Dispositif selon l'une des revendications 8 ou 9, **caractérisé en ce que** le moyen de mesure de diamètre et/ou d'épaisseur de paroi (20) comporte un moyen de mesure de rayonnement térahertz.

11. Dispositif selon l'une des revendications précédentes, **caractérisé en ce que** le moyen d'évaluation (28) est en outre conçu pour détecter un rétrécissement attendu du toron tubulaire (12) jusqu'à ce que celui-ci atteigne sa forme définitive, à partir de la position du toron tubulaire (12) à laquelle la température à l'intérieur du toron tubulaire (12) et/ou sur le côté intérieur du toron tubulaire (12) est déterminée, sur la base du coefficient de dilatation dépendant de la température du matériau du toron tubulaire (12).

12. Dispositif selon les revendications 8 et 11, **caractérisé en ce que** le moyen d'évaluation (28) est en outre conçu pour détecter un diamètre et/ou une épaisseur de paroi du toron tubulaire après atteinte de sa forme définitive en tenant compte du diamètre mesuré et/ou de l'épaisseur de paroi mesurée du toron tubulaire (12) à la première position et/ou à la deuxième position du toron tubulaire (12) et en tenant compte du rétrécissement attendu détecté.

13. Dispositif selon l'une des revendications précédentes, **caractérisé en ce que** le moyen d'évaluation (28) est en outre conçu pour déterminer l'indice de réfraction du matériau du toron tubulaire (12) à l'aide de la température déterminée.

14. Dispositif selon l'une des revendications précédentes, **caractérisé en ce qu'**il est également prévu un moyen de commande en boucle ouverte et/ou en boucle fermée (42), lequel commande le dispositif d'extrusion (10) en boucle ouverte et/ou en boucle fermée sur la base de la température déterminée à l'intérieur du toron tubulaire (12) et/ou sur le côté intérieur du toron tubulaire (12).

15. Procédé de détermination de la température d'un toron tubulaire (12) transporté hors d'un dispositif d'extrusion (10), dans lequel une première température du côté extérieur du toron tubulaire (12) est mesurée à une première position du toron tubulaire (12), **caractérisé en ce que**
la première température est comparée avec une deuxième température du côté extérieur du toron tubulaire (12) à une deuxième position du toron tubulaire (12), laquelle est espacée de la première position dans la direction de transport (14) du toron tubulaire (12), et **en ce que** la température à l'intérieur du toron tubulaire (12) et/ou sur le côté intérieur du toron tubulaire (12) est déterminée à une position du toron tubulaire (12) à partir de la comparaison de la première et de la deuxième température.

16. Procédé selon la revendication 15, **caractérisé en ce qu'**au moins la première température est mesurée après que le toron tubulaire a traversé un trajet de refroidissement (16) disposé en aval du dispositif d'extrusion (10).

17. Procédé selon l'une des revendications 15 ou 16, **caractérisé en ce que** la température à l'intérieur du toron tubulaire (12) et/ou sur le côté intérieur du toron tubulaire (12) est déterminée à l'aide d'une méthode des éléments finis à partir de la comparaison de la première et de la deuxième température.

18. Procédé selon l'une des revendications 15 à 17, **caractérisé en ce que** la première température est mesurée à plusieurs endroits répartis sur la circonférence du toron tubulaire (12) à la première position, et **en ce que** la température mesurée à plusieurs endroits répartis sur la circonférence du toron tubulaire (12) est comparée avec la deuxième température également à plusieurs endroits répartis sur la circonférence du toron tubulaire (12) à la deuxième position, et **en ce que** la température à l'intérieur du toron tubulaire (12) et/ou sur le côté intérieur du toron tubulaire (12) est déterminée à plusieurs endroits répartis sur la circonférence du toron tubulaire (12) à la position du toron tubulaire (12) à partir de la comparaison.

19. Procédé selon l'une des revendications 15 à 18, **caractérisé en ce que** la température du toron tubulaire (12) est déterminée à plusieurs endroits à l'intérieur du toron tubulaire (12) à la position du toron tubulaire (12) à laquelle la température à l'intérieur du toron tubulaire (12) et/ou sur le côté intérieur du toron tubulaire (12) est déterminée.

20. Procédé selon l'une des revendications 15 à 19, **caractérisé en ce que** le diamètre et/ou l'épaisseur de paroi du toron tubulaire (12) sont également mesurés à la première position et/ou à la deuxième position du toron tubulaire (12).

21. Procédé selon la revendication 20, **caractérisé en ce que** le diamètre mesuré et/ou l'épaisseur de paroi mesurée sont pris en compte lors de la détermination de la température à l'intérieur du toron tubulaire (12) et/ou sur le côté intérieur du toron tubulaire (12) et/ou **en ce que** la température à l'intérieur du toron tubulaire et/ou sur le côté intérieur du toron tubulaire est prise en compte lors de la détermination du diamètre et/ou de l'épaisseur de paroi.

22. Procédé selon l'une des revendications 15 à 21, **caractérisé en ce qu'**un rétrécissement attendu du toron tubulaire (12) est détecté jusqu'à ce que celui-ci atteigne sa forme définitive, à partir de la position du toron tubulaire (12) à laquelle la température à l'intérieur du toron tubulaire (12) et/ou sur le côté intérieur du toron tubulaire (12) est déterminée, sur la base du coefficient de dilatation dépendant de la température du matériau du toron tubulaire (12).

23. Procédé selon les revendications 20 et 22, **caractérisé en ce qu'**un diamètre et/ou une épaisseur de paroi du toron tubulaire après atteinte de sa forme définitive sont détectés en tenant compte du diamètre mesuré et/ou de l'épaisseur de paroi mesurée du toron tubulaire (12) à la première position et/ou à la deuxième position du toron tubulaire (12) et en tenant compte du rétrécissement attendu détecté.

24. Procédé selon l'une des revendications 15 à 23, **caractérisé en ce que** l'indice de réfraction du matériau du toron tubulaire (12) est déterminé à l'aide de la température déterminée.

25. Procédé selon l'une des revendications 15 à 24, **caractérisé en ce que** le dispositif d'extrusion (10) est commandé en boucle ouverte et/ou en boucle fermée sur la base de la température déterminée à l'intérieur du toron tubulaire (12) et/ou sur le côté intérieur du toron tubulaire (12).
